Europäisches Patentamt

European Patent Office

Office européen des brevets

(19)

(11) Veröffentlichungsnummer: **0 272 427 B1**

(12) **EUROPÄISCHE PATENTSCHRIFT**

(45) Veröffentlichungstag der Patentschrift: **14.04.93**

(21) Anmeldenummer: **87116460.4**

(22) Anmeldetag: **07.11.87**

(51) Int. Cl.5: **C08G  59/50**, C08G 81/02, C09D 5/44, C09D 109/02, C09D 163/00

(54) **Durch Protonierung mit Säure wasserverdünnbare Bindemittel.**

(30) Priorität: **20.11.86 DE 3639570**

(43) Veröffentlichungstag der Anmeldung:
**29.06.88 Patentblatt  88/26**

(45) Bekanntmachung des Hinweises auf die
Patenterteilung:
**14.04.93 Patentblatt  93/15**

(84) Benannte Vertragsstaaten:
**AT BE CH DE ES FR GB IT LI NL SE**

(56) Entgegenhaltungen:
**DE-A- 2 643 504        DE-A- 2 924 343
DE-A- 2 926 001        DE-A- 2 928 769
GB-A- 2 099 003        US-A- 4 486 571
US-A- 4 617 348**

(73) Patentinhaber: **BASF Lacke  +  Farben AG
Glasuritstrasse 1
W-4400 Münster(DE)**

(72) Erfinder: **Schwerzel, Thomas, Dr.
Budapester Strasse 51
W-6700 Ludwigshafen(DE)**
Erfinder: **Osterloh, Rolf, Dr.
Am Kappelbusch 2
W-5042 Erftstadt(DE)**
Erfinder: **Schupp, Eberhard, Dr.
Theodor-Storm-Strasse 29
W-6718 Gruenstadt(DE)**
Erfinder: **Perner, Thomas, Dr.
Berner Weg 24
W-6700 Ludwigshafen(DE)**
Erfinder: **Ahlers, Klaas, Dr.
Foehrenweg 21
W-4400 Muenster(DE)**

(74) Vertreter: **Welzel, Gunther, Dr. et al
BASF Aktiengesellschaft Patentabteilung
ZNP - C 6 Carl-Bosch-Strasse 38
W-6700 Ludwigshafen (DE)**

EP 0 272 427 B1

Rank Xerox (UK) Business Services
(3. 10/3.5x/3.0. 1)

EP 0 272 427 B1

**Beschreibung**

Die vorliegende Erfindung betrifft durch Protonieren mit Säure wasserverdünnbare Bindemittel, erhältlich durch Reaktion von

A) einem Epoxidharz mit einem mittleren Molekulargewicht von 300 bis 6000 und im Mittel 1,5 bis 3,0 Epoxidgruppen pro Molekül und

B) 20 bis 80 Mol-%, bezogen auf die Menge der im Epoxidharz (A) vorhandenen Epoxidgruppen, mindestens eines Amins, ausgewählt aus sekundären aliphatischen oder cycloaliphatischen Dialkylaminen und/oder Alkanolaminen mit bis zu 40 C-Atomen, sowie Pyrrolidin, Piperidin und Morpholin,

und anschließende Umsetzung mit

C) primäre und/oder sekundäre Aminogruppen enthaltenden Copolymerisaten auf Basis von Butadien und Acrylnitril, wobei die Menge von (C) so bemessen ist, daß die Anzahl der primären und sekundären Aminogruppen 1 bis 50 Mol-% der im Epoxidharz (A) vorhandenen Epoxidgruppen entspricht, sowie

D) mit mindestens einem primären und/oder sekundären Amin, ausgewählt aus der Gruppe Hexylamin, Octylamin, Dibutylamin, Ethylbutylamin, Ethylendiamin, 1,3-Diaminopropan, 1,4-Diaminobutan, 1,6-Diaminohexan, 2-Methylpentan-1,5-diamin, 4,7-Dioxadekan-1,10-diamin, 4,9-Dioxadodekan-1,12-diamin, 4,4'-Diaminodicyclohexylmethan, 3,3'-Dimethyl-4,4'-diaminodicyclohexylmethan, Propanolamin, Isopropanolamin, Methylethanolamin, 2,2'-Aminoethoxyethanol, Aminoethylmethylamin, Diethylentriamin, Triethylentetramin, 3-(2-Aminoethyl)aminopropylamin, Dipropylentriamin, zur Umsetzung der noch vorhandenen Epoxidgruppen,

deren Herstellung und Verwendung insbesondere für die kathodische Elektrotauchlackierung.

Die Verwendung von Polybutadien und Copolymerisaten aus Butadien und anderen Vinylmonomeren als Elastifizierungskomponente zur Herstellung von Lacksystemen für die kathodische Elektrotauchlackierung ist bekannt und wurde in der Patentliteratur beschrieben.

So bezieht sich zum Beispiel die DE-B 29 26 001 auf Lacksysteme, in denen das Weichsegment (butadienhaltiges Copolymerisat) so in die filmbildende Komponente eingebracht wird, daß ein Polymerisat aus einem konjugierten Dien oder ein Copolymerisat aus einem konjugierten Dien und einem Vinylmonomeren jeweils mit endständigen Carboxylgruppen mit einem Epoxidharz umgesetzt wird.

In der DE-A 29 28 769 wird ein Harz beschrieben, das dadurch erhalten wird, daß man eine Epoxygruppen enthaltende Verbindung und ein Carboxylgruppen enthaltendes Butadien/Acrylnitril-Copolymerisat im Verhältnis von 1 Epoxyäquivalent der erstgenannten Verbindung zu etwa 0,2 bis 0,7 Äquivalent der freien Carboxylgruppen des Copolymerisats mit einer Aminogruppen enthaltenden Verbindung und einer teilweise blockierten, Isocyanatgruppen enthaltenden Verbindung umsetzt.

Nach der DE-B 29 26 001 und der DE-A-29 28 769 wird carboxylgruppenhaltiges Polybutadien bzw. carboxylgruppenhaltiges Butadien/Vinylmonomer-Copolymerisat so eingesetzt, daß die Carboxylgruppen mit den Epoxidgruppen unter Bildung von $\beta$-Hydroxyesterstruktureinheitenreagieren. Diese $\beta$-Hydroxyester sind als reaktive Ester bekannt, was sich z.B. in leichter Verseifbarkeit äußert.

In der US-A 4 486 571 wird eine Beschichtungsmasse beschrieben, die so erhalten wird, daß man zuerst ein mit sekundären Aminogruppen terminiertes Butadien/Acrylnitril-Copolymer zunächst mit Monoepoxiden und dann mit Diepoxiden umsetzt. Anschließend wird dieses epoxymodifizierte Butadien/Acrylnitril-Copolymer mit polyfunktionellen Alkoholen umgesetzt. Dieses Harz wird in Kombination mit einem Amin-Formaldehyd-Harz als Beschichtungsmasse eingesetzt. Weiterhin ist in der US-A 4 486 571 beschrieben, daß durch Protonieren der Beschichtungsmasse eine kathodisch abscheidbare Dispersion erhalten werden kann. Nachteil der in der US-A 4 486 571 beschriebenen Beschichtungsmasse ist, daß protonierbare Stickstoffatome, die für die Herstellung von kationischen Dispersionen notwendig sind, nur über die Elastifizierungskomponente eingeführt werden können. Wegen der durch das hohe Molekulargewicht der Elastifizierungskomponente bedingten niedrigen Anzahl an basischen Stickstoffatomen der Bindemittel ist die Dispersion sehr empfindlich gegenüber pH-Wert-Schwankungen, was zu Instabilitäten von Elektrotauchlackierbädern führen kann.

Aufgabe der vorliegenden Erfindung ist die Bereitstellung neuer Bindemittel, die hydrolysestabil sind und die durch Protonieren mit Säure gegenüber pH-Wert-Schwankungen stabile Dispersionen ergeben, mit denen man hochelastische Überzüge auf Substraten herstellen kann.

Demgemäß wurden durch Protonieren mit Säure wasserverdünnbare Bindemittel gefunden, erhältlich durch Reaktion von

A) einem Epoxidharz mit einem mittleren Molekulargewicht von 300 bis 6000 und im Mittel 1,5 bis 3,0 Epoxidgruppen pro Molekül und

B) 20 bis 80 Mol-%, bezogen auf die Menge der im Epoxidharz (A) vorhandenen Epoxidgruppen, mindestens eines sekundären aliphatischen oder cycloaliphatischen Dialkylamins und/oder Alkanolamins

2

mit bis zu 40 C-Atomen, sowie Pyrrolidin, Piperidin und Morpholin,
und anschließende Umsetzung mit

C) primäre und/oder sekundäre Aminogruppen enthaltenden Copolymerisaten auf Basis von Butadien und Acrylnitril, wobei die Menge von (C) so bemessen ist, daß die Anzahl der primären und sekundären Aminogruppen 1 bis 50 Mol-% der im Epoxidharz (A) vorhandenen Epoxidgruppen entspricht, sowie

D) mit mindestens einem primären und/oder sekundären Amin, ausgewählt aus der gruppe Hexylamin, Octylamin, Dibutylamin, Ethylbutylamin, Ethylendiamin, 1,3-Diaminopropan, 1,4-Diaminobutan, 1,6-Diaminohexan, 2-Methylpentan-1,5-diamin, 4,7-Dioxadekan-1,10-diamin, 4,9-Dioxadodekan-1,12-diamin, 4,4'-Diaminodicyclohexylmethan, 3,3'-Dimethyl-4,4'-diaminodicyclohexylmethan, Propanolamin, Isopropanolamin, Methylethanolamin, 2,2'-Aminoethoxyethanol, Aminoethylmethylamin, Diethylentriamin, Triethylentetramin, 3-(2-Aminoethyl)aminopropylamin, Dipropylentriamin, zur Umsetzung der noch vorhandenen Epoxidgruppen.

Gegenstand der Erfindung ist außerdem die Verwendung der erfindungsgemäßen, durch Protonieren mit Säure wasserverdünnbaren Bindemittel in Form von wäßrigen Dispersionen, die zusätzlich noch Vernetzer und gegebenenfalls Pigmente, organische Lösemittel und/oder weitere Hilfsstoffe enthalten, als Überzugsmittel, insbesondere für die kathodische Elektrotauchlackierung elektrisch Leitfähiger Substrate, sowie ein Verfahren zur Herstellung von Überzügen durch kathodische Elektrotauchlackierung.

Weiterhin bezieht sich die vorliegende Erfindung auf mit Lacküberzügen versehene Gegenstände, die durch das Aufbringen der erfindungsgemäß hergestellten Bindemittel und Vernetzer durch Einbrennen erhalten worden sind.

Das Reaktionsprodukt aus einem Epoxidharz (A), einem sekundären aliphatischen oder cycloaliphatischen Amin (B), einem Aminogruppen enthaltenden Butadien/Acrylnitril-Copolymeren (C) und einem primären und/oder sekundären Amin (D), das für sich wiederum weitere protonierbare Aminogruppen tragen kann, führt zu basischen Bindemitteln, die in ihrer Basizität durch geeignete Wahl der Aminkomponente variabel sind. In Kombination mit einem ungeladenen Vernetzer können diese erfindungsgemäßen Bindemittel schon nach Neutralisation von 20 bis 60 %, zweckmäßigerweise jedoch von 25 bis 45 %, aller basischen Stickstoffatome des Bindemittels in stabile wäßrige Dispersionen überführt werden.

Als Epoxidharze (A) kommen an sich bekannte Harze zur Anwendung, sofern sie ein mittleres Molekulargewicht ($\overline{M}_n$) von 300 bis 6000 und im Mittel 1,5 bis 3,0 Epoxidgruppen pro Molekül enthalten, vorzugsweise Verbindungen mit zwei Epoxidgruppen pro Molekül.

Bevorzugt sind Epoxidharze mit mittleren Molekulargewichten ($\overline{M}_n$) von 350 bis 5000, insbesondere 350 bis 2000. Besonders bevorzugte Epoxidharze sind zum Beispiel Glycidylether von im Mittel mindestens zwei phenolische Hydroxylgruppen pro Molekül enthaltenden Polyphenolen, die sich in üblicher Weise durch Veretherung mit einem Epihalohydrin in Gegenwart von Alkali herstellen lassen. Beispiele für geeignete Phenolverbindungen sind 2,2-Bis-(4-hydroxyphenyl)-propan (Bisphenol A), 4,4'-Dihydroxybenzophenon, 1,1-Bis-(4-hydroxyphenyl)-ethan, 1,1-Bis-(4-hydroxyphenyl)-isobutan, 2,2-Bis-(4-hydroxy-tert.-butyl-phenyl)-propan, Bis-(2-hydroxynaphthylmethan, 1,5-Dihydroxynaphthalin. In manchen Fällen ist es wünschenswert, aromatische Epoxidharze mit höherem Molekulargewicht einzusetzen. Diese werden erhalten, indem man die oben genannten Diglycidylether mit einem Polyphenol, wie beispielsweise 2,2-Bis-(4-hydroxyphenyl)-propan, reagieren läßt und dann die erhaltenen Produkte mit Epichlorhydrin unter Herstellung von Polyglycidylethern weiter umsetzt.

Geeignete sekundäre Amine (B) sind aliphatische und cycloaliphatische Dialkylamine, insbesondere Dialkylamine und/oder Alkanolamine mit 2 bis 18 Kohlenstoffatomen, z.B. Diethylamin, Dipropylamin, Dibutylamin, Ethylpropylamin sowie Alkanolamine, z.B. Methylethanolamin, Ethylethanolamin, Methylisopropanolamin, Diethanolamin, Diisopropanolamin und Pyrrolidin, Piperidin und Morpholin sowie Gemische dieser Amine untereinander.

Als Komponente (C) eignen sich Butadien-Acrylnitril-Copolymere mit Acrylnitrilgehalten von 5 bis 45 Gew.-%, bevorzugt 10 bis 30 Gew.-%, mit Butadiengehalten von 55 bis 95 Gew.-%, bevorzugt 70 bis 90 Gew.%, die pro Molekül im Mittel 1,4 bis 3,0 primäre und/oder sekundäre Aminogruppen, sowie gegebenenfalls noch zusätzlich tertiäre Aminogruppen enthalten. Das Molekulargewicht des Copolymeren beträgt vorteilhaft 1000 bis 15000, bevorzugt 2000 bis 8000.

Beispielsweise lassen sich die Aminogruppen enthaltenden Butadien-Acrylnitril-Copolymeren durch Umsetzung von Carboxylgruppen enthaltenden Butadien-Acrylnitril-Copolymeren mit einem primären und/oder sekundären Diamin herstellen. Kommerziell erhältlich sind diese Copolymeren z.B. unter der Bezeichnung HYCAR® 1300X16 ATBN und HYCAR 1300X21 (Fa. B.F. Goodrich) mit 16 Gew.-% und 10 Gew.-% Acrylnitril.

Weiterhin kann man Aminogruppen enthaltende Butadien-Acrylnitril-Copolymere durch partielle Hydrierung von Butadien-Acrylnitril-Copolymeren herstellen oder durch Addition von primären Aminen an epoxidgruppenhaltige Butadien-Acrylnitril-Copolymere.

Die Amine (D) werden ausgewählt aus der Gruppe Hexylamin, Octylamin, Dibutylamin, Ethylbutylamin, Ethylendiamin, 1,3-Diaminopropan, 1,4-Diaminobutan, 1,6-Diaminohexan, 2-Methylpentan-1,5-diamin, 4,7-Dioxadekan-1,10-diamin, 4,9-Dioxadodecan-1,12-diamin, 4,4'-Diaminodicyclohexylmethan, 3,3'-Dimethyl-4,4'-diaminodicyclohexylmethan, Propanolamin, Isopropanolamin, Methylethanolamin, 2,2'-Aminoethoxyethanol, Aminoethylmethylamin, Diethylentriamin, Triethylentetramin, 3-(2-Aminoethyl)aminopropylamin, Dipropylentriamin.

Die Mengenverhältnisse der Komponenten A, B, C und D sind in weiten Grenzen variierbar, jedoch sollten nach der Umsetzung alle Epoxidgruppen abreagiert sein.

Die Umsetzung wird in der Regel so durchgeführt, daß man das Epoxidharz (A) nach Auflösung in einem organischen Lösungsmittel oder Lösungsmittelgemisch, das weder mit Epoxidgruppen noch mit Aminen reagieren kann, mit dem sekundären Amin (B) bei Temperaturen von 20 bis 150°C, bevorzugt 40 bis 110°C und Reaktionszeiten bis 2 h umsetzt. In diese Reaktionslösung wird ein Gemisch aus dem Aminogruppen enthaltenden Butadien/Acrylnitril-Copolymeren (C) und dem Amin (D) gegeben und bei 20 bis 150°C, vorzugsweise 40 bis 110°C, bei Reaktionszeiten von bis 5 h ausreagieren lassen.

Dabei werden im allgemeinen pro mol Epoxidgruppen der Komponente (A) 0,2 bis 0,8 mol, bevorzugt 0,3 bis 0,6 mol, sekundäres Amin (B), 0,01 bis 0,25 mol, bevorzugt jedoch 0,08 bis 0,15 mol, Aminogruppen tragendes Butadien/Acrylnitril-Copolymer (C) und 0,10 bis 0,45 mol, bevorzugt jedoch 0,15 bis 0,30 mol, Amin (D) eingesetzt.

Die aus dieser Reaktion hervorgehenden Bindemittel haben Aminzahlen von 40 bis 230 mg KOH/g Substanz, bevorzugt jedoch 50 bis 150 mg KOH/g Substanz.

Zum Protonieren der Bindemittel können anorganische und organische Säuren eingesetzt werden, z.B. Ameisensäure, Essigsäure, Propionsäure, Milchsäure und Phosphorsäure.

Geeignete Vernetzer für die erfindungsgemäßen Bindemittel sind z.B. Aminoplastharze oder Phenoplastharze, wie Harnstoff-Formaldehyd-Harze, Melaminharze oder Benzoguanaminharze, mehrwertiges geblocktes Isocyanat, ein mehr fach aminomethyliertes Polyphenol, über Esteraminolyse und/oder Umesterung härtende Vernetzer mit im Mittel mindestens zwei aktivierten Estergruppen pro Molekül, z.B. $\beta$-Hydroxyalkylester-Vernetzer gemäß EP 0 040 867 und Carbalkoxymethylester-Vernetzer gemäß der EP 102 501 und Harnstoffkondensationsprodukte, wie sie in der DE-A 33 11 514 beschrieben sind.

Das Verhältnis von Bindemittel zu Vernetzer richtet sich nach Art und Anzahl der vernetzungsaktiven Gruppen im Bindemittel und Vernetzer. Im allgemeinen wird man ein Bindemittel/Vernetzer-Verhältnis von 0,1:1 bis 9:1, bevorzugt jedoch 1:1 bis 9:1, besonders bevorzugt 1,5:1 bis 4:1, bezogen auf Gewichtsteile, einstellen.

Außer den Vernetzern können dem Bindemittel noch weitere Stoffe, wie Pigmente, Hilfsmittel, Lösemittel und Härtungskatalysatoren zugesetzt werden.

Die so hergestellten Überzugsmittel können durch übliche Methoden, wie Spritzen, Tauchen, Gießen und Rakeln auf Substrate, wie holz, Glas, Kunststoff oder Metall aufgebracht werden.

Die Aushärtung der Überzüge erfolgt je nach Art des Vernetzers zwischen 80 und 220°C während 3 bis 40 Minuten.

Für die kathodische Elektrotauchlackierung wird im allgemeinen ein Feststoffgehalt des Elektrotauchbades von 5 bis 45 Gew.-%, bevorzugt 10 bis 30 Gew.-%, eingestellt. Die Abscheidung erfolgt üblicherweise bei Temperaturen von 15 bis 40°C während 30 Sekunden bis 360 Sekunden. Der pH-Wert des Bades wird zwischen 4,5 und 9,0 bevorzugt zwischen 5,0 und 8,0 eingestellt. Die Abscheidespannung wird zwischen 50 und 500 Volt eingestellt. Der zu beschichtende Gegenstand wird als Kathode geschaltet. Der abgeschiedene Film wird bei Temperaturen >90°C eingebrannt.

A) Herstellung der Bindemittel

Bindemittel 1:

384 g eines Umsetzungsproduktes aus dem Diglycidylether des Bisphenol A und Bisphenol A mit einem Epoxidäquivalentgewicht von 460 wurden bei 100°C in 185 g Isobutanol gelöst. Bei 60°C tropfte man 27 g Methylethanolamin in 5 Minuten zu und rührte 15 Minuten nach. Zu der Reaktionslösung gab man eine Mischung aus 521 g einer 70gew.%igen Lösung eines Aminogruppen enthaltenden Butadien-Acrylnitril-Copolymeren vom Molekulargewicht 3600, das durch Reaktion von Aminoethylpiperazin mit einem carboxylgruppenterminierten Butadien-Acrylnitril-Copolymeren hergestellt wurde und 16 Gew.-% Acrylnitril aufwies, in Toluol und 20,4 g Hexamethylendiamin, erhitzte auf 100°C und rührte noch 1,5 Stunden. Es resultierte eine Lösung mit einem Feststoffgehalt von 70 Gew.-% und einer Aminzahl von 80 mg KOH/g.

Bindemittel 2:

960 g des Epoxidharzes des Bindemittels 1 wurden bei 100°C in 486 g Isobutanol gelöst. Bei 60°C tropfte man 67,5 g Methylethanolamin in 5 Minuten zu und rührte 15 Minuten nach. Zu der Reaktionslösung gab man eine Mischung aus 1302,8 g einer 70gew.%igen Lösung des Aminogruppen enthaltenden Butadien-Acrylnitril-Copolymeren des Bindemittels 1 in Toluol und 104,8 g 3,3'-Dimethyl-4,4'-diaminodicyclohexylmethan hinzu, erhitzte auf 100°C und rührte noch 1,5 Stunden. Es resultierte eine Lösung mit einem Feststoffgehalt von 70 Gew.-% und einer Aminzahl von 76 mg KOH/g.

Bindemittel 3:

384 g des Epoxidharzes des Bindemittels 1 wurden bei 100°C in 185 g Isobutanol gelöst. Bei 60°C tropfte man 30 g Methylethanolamin in 5 Minuten zu und rührte 15 Minuten nach. Zu der Reaktionslösung gab man eine Mischung aus 542 g einer 70gew.%igen Lösung des Aminogruppen enthaltenden Butadien-Acrylnitril-Copolymeren des Bindemittels 1 in Toluol und 17,2 g Hexamethylendiamin, erhitzte auf 100°C und rührte noch 1,5 Stunden. Es resultierte eine Lösung mit einem Feststoffgehalt von 70 Gew.-% und einer Aminzahl von 84 mg KOH/g.

Bindemittel 4:

384 g des Epoxidharzes des Bindemittels 1 wurden bei 100°C in 185 g Isobutanol gelöst. Bei 60°C tropfte man 27 g Methylethanolamin in 5 Minuted zu und rührte 15 Minuten nach. Zu der Reaktionslösung gab man eine Mischung aus 521 g einer 70gew.%igen Lösung des Aminogruppen enthaltenden Butadien-Acrylnitril-Copolymeren des Bindemittels 1 in Toluol und 17,8 g Hexylamin, erhitzte auf 100°C und rührte noch 1,5 Stunden. Die resultierende Lösung hatte einem Feststoffgehalt von 72 Gew.-% und einer Aminzahl von 67 mg KOH/g.

Bindemittel 5:

384 g des Epoxidharzes des Bindemittels 1 wurden bei 100°C in 185 g Isobutanol gelöst. Bei 60°C tropfte man 27 g Methylethanolamin in 5 Minuten zu und rührte 15 Minuten nach. Zu der Reaktionslösung gab man eine Mischung aus 521 g einer 70gew.%igen Lösung des Aminogruppen enthaltenden Butadien-Acrylnitril-Copolymeren des Bindemittels 1 in Toluol und 13,2 g Propanolamin, erhitzte auf 100°C und rührte noch 1,5 Stunden. Die resultierende Lösung hatte einen Feststoffgehalt von 71 Gew.-% und eine Aminzahl von 66 mg KOH/g.

B) Herstellung der Vernetzer

Vernetzer 1:

504 g trimerisiertes Hexamethylendiisocyanat wurden in 382 g Methylisobutylketon gelöst. Unter Kühlen tropfte man bei 70°C 388 g Dibutylamin hinzu. Man rührte bis der Isocyanatgehalt nahe Null war.

Vernetzer 2:

1340 g Trimethylolpropan, 3600 g Harnstoff, 3870 g Dibutylamin, 1740 g Hexamethylendiamin und 3570 g 3,3'-Dimethyl-4,4'-diaminodicyclohexylmethan wurden langsam erwärmt. Ab 120°C kam es zur Abspaltung von Ammoniak und der Harnstoff ging in Lösung. Innerhalb von 2 Stunden wurde die Temperatur auf 155°C erhöht, wobei starker Rückfluß auftrat und große Mengen eines weichen, kristallinen Niederschlags ausfielen. Nach weiteren 5 Stunden unter Rückfluß hatte sich der Niederschlag wieder aufgelöst und eine Temperatur von 165°C war erreicht. Nun wurden innerhalb von 2 Stunden 3870 g Dibutylamin zugetropft und nach beendeter Zugabe noch 8 Stunden auf 185°C erhitzt. Anschließend wurden bei dieser Temperatur 3600 g Dibutylamin im Vakuum abgezogen und nach dem Abkühlen auf 130°C mit 5170 g Toluol verdünnt. Das Produkt war eine farblose, viskose Flüssigkeit mit einem Feststoffgehalt von 70 Gew.-%.

C) Pigmentpaste

Zu 525,8 g Bindemittel 1 gab man 168,7 g Butylglykol, 600 g Wasser und 17,7 ml Essigsäure. Dann setzte man 800 g Titandioxid, 11,0 g Ruß und 50 g basisches Bleisilicat hinzu. Es wurde auf einer Kugelmühle bis zu einer Korngröße kleiner 9 µm gemahlen. Anschließend stellte man mit Wasser einen Feststoffgehalt von 47 Gew.-% ein.

Beispiele

Die zur Herstellung der Dispersionen in der Tabelle angegebenen Mengen Bindemittel, Vernetzer und Essigsäure wurden innig vermischt. Zu dem Gemisch wurde unter Rühren langsam die angegebene Menge Wasser hinzugetropft.

| Beispiele | Bindemittel | Menge | Vernetzer | Essigsäure | Wasser |
|---|---|---|---|---|---|
| 1 | 1 | 798 g | 1 | 16,4 g | 1125 g |
| 2 | 1 | 794 g | 2 | 17,7 g | 1171 g |
| 3 | 2 | 791 g | 1 | 16,0 g | 1133 g |
| 4 | 3 | 800 g | 1 | 16,0 g | 1124 g |
| 5 | 4 | 776 g | 1 | 14,2 g | 1168 g |
| 6 | 5 | 781 g | 1 | 13,9 g | 1163 g |

Zu 1980 g Dispersion (35gew.%ig) gab man 764 g der Pigmentpaste, rührte innig und füllte mit Wasser auf 5000 g auf.

Die Elektrotauchlackierbäder wurden 120 Stunden bei 28°C gerührt. An kathodisch geschalteten, zinkphosphatierten Prüftafeln aus Stahl wurden Lackfilme innerhalb 120 Sekunden bei der in der Tabelle angegebenen Spannung abgeschieden und 20 Minuten bei 170°C engebrannt. Die folgende Tabelle zeigt die Ergebnisse:

| Beispiele | Spannung | pH | Leitwert $[mScm^{-1}]$ | Schicht-dicke $[µm]$ | Ford-Umgriff $[cm]$ | Schlag-tiefung[*] $[Nm]$ | 720 h[**] SSK |
|---|---|---|---|---|---|---|---|
| 1 | 330 | 6,8 | 1,9 | 21 | 20,5 | >18,08 | 0,5 mm |
| 2 | 300 | 6,6 | 2,2 | 19 | 20,0 | 17,48 | 0,3 mm |
| 3 | 350 | 6,4 | 2,1 | 17 | 21,5 | >18,08 | 0,2 mm |
| 4 | 330 | 6,8 | 1,8 | 26 | 20,5 | >18,08 | 0,4 mm |
| 5 | 330 | 6,2 | 1,9 | 22 | 19,5 | >18,08 | 0,5 mm |
| 6 | 270 | 6,2 | 1,8 | 19 | 19,5 | 17,18 | 0,1 mm |

[*] Die Schlagtiefung wurde mit einem mandrel impact tester der Fa. Gardner nach ASTM D 2794 bestimmt.

[**] 720 h SSK: Unterwanderung am Ritz nach 720 Stunden Salzsprüh-nebelbelastung (nach DIN 50021)

**Patentansprüche**

1. Durch Protonieren mit Säure wasserverdünnbare Bindemittel, erhältlich durch Reaktion von
   A) einem Epoxidharz mit einem mittleren Molekulargewicht von 300 bis 6000 und im Mittel 1,5 bis 3,0 Epoxidgruppen pro Molekül und
   B) 20 bis 80 Mol-%, bezogen auf die Menge der im Epoxidharz (A) vorhandenen Epoxidgruppen, mindestens eines Amins, ausgewählt aus sekundaren aliphatischen oder cycloaliphatischen Dialkylaminen und/oder Alkanolaminen mit bis zu 40 C-Atomen, sowie Pyrrolidin, Piperidin und Morpholin,
   und anschließende Umsetzung mit
   C) primäre und/oder sekundäre Aminogruppen enthaltenden Copolymerisaten auf Basis von Butadien und Acrylnitril, wobei die Menge von (C) so bemessen ist, daß die Anzahl der primären und sekundären Aminogruppen 1 bis 50 Mol-% der im Epoxidharz (A) vorhandenen Epoxidgruppen entspricht, sowie
   D) mit mindestens einem primären und/oder sekundären Amin, ausgewählt aus der gruppe Hexylamin, Octylamin, Dibutylamin, Ethylbutylamin, Ethylendiamin, 1,3-Diaminopropan, 1,4-Diaminobutan, 1,6-Diaminohexan, 2-Methylpentan-1,5-diamin, 4,7-Dioxadekan-1,10-diamin, 4,9-Dioxadodekan-1,12-diamin, 4,4'-Diaminodicyclohexylmethan, 3,3'-Dimethyl-4,4'-diaminodicyclohexylmethan, Propanolamin, Isopropanolamin, Methylethanolamin, 2,2'-Aminoethoxyethanol, Aminoethylmethylamin, Diethylentriamin, Triethylentetramin, 3-(2-Aminoethyl)aminopropylamin, Dipropylentriamin, zur Umsetzung der noch vorhandenen Epoxidgruppen.

2. Bindemittel nach Anspruch 1, erhältlich unter Verwendung mindestens eines Dialkylamins und/oder Alkanolamins, das 2 bis 18 Kohlenstoffatome enthält, als Komponente (B).

3. Bindemittel nach den Ansprüchen 1 oder 2, in denen die Komponente (C) ein aminogruppenhaltiges Butadien/Acrylnitril-Copolymer ist, das 5 bis 45 Gew.-% Acrylnitril einpolymerisiert und im Mittel 1,4 bis 3,0 primäre und/oder sekundäre Aminogruppen im Copolymermolekül enthält.

4. Bindemittel nach einem der Ansprüche 1 bis 3, in denen das aminogruppenhaltige Butadien/Acrylnitril-Copolymer aus einem carboxylgruppenhaltigen Butadien/Acrylnitril-Copolymer und einem primären und/oder sekundären Diamin erhältlich ist.

5. Verwendung der Bindemittel gemäß den Ansprüchen 1 bis 5 in Form einer wäßrigen Dispersion, die zusätzlich Vernetzer und gegebenenfalls Pigmente, organische Lösemittel und/oder weitere Hilfsstoffe enthält, als Überzugsmittel.

6. Verwendung der durch Protonieren mit Säure wasserverdünnbaren Bindemittel gemäß Anspruch 6 für die kathodische Tauchlackierung elektrisch leitfähiger Substrate.

7. Überzugsmittel auf Basis von Bindemitteln gemäß Ansprüchen 1 bis 5 in Form einer wäßrigen Dispersion, die zusätzlich ein mehrwertiges geblocktes Isocyanat, ein Aminoplast- oder Phenoplastharz, ein mehrfach aminomethyliertes Polyphenol, einen über Esteraminolyse und/oder Umesterung härtenden Vernetzer oder ein Harnstoffkondensationsprodukt enthält.

8. Verfahren zur Herstellung von Überzügen durch kathodische Elektrotauchlackierung aus einem Elektrotauchlackierbad, dadurch gekennzeichnet, daß das Elektrotauchlackierbad ein mit Säure protonierbares Bindemittel gemäß den Ansprüchen 1 bis 5 oder ein Überzugsmittel gemäß Anspruch 8 mit gegebenenfalls noch weiteren Hilfsstoffen enthält.

9. Mit einem Überzug versehener Gegenstand, erhältlich durch Aufbringen eines Überzugsmittels gemäß Anspruch 8 auf diesen Gegenstand und anschließendes Einbrennen.

**Claims**

1. A binder which becomes water-thinnable on protonation with an acid, obtainable by reaction of
   A) an epoxy resin having an average molecular weight of from 300 to 6,000 and on average from 1.5 to 3.0 epoxide groups per molecule and

EP 0 272 427 B1

B) from 20 to 80 mol%, based on the amount of epoxide groups present in epoxy resin (A), of one or more amines selected from secondary aliphatic or cycloaliphatic dialkylamines and/or alkanolamines of up to 40 carbon atoms, pyrrolidine, piperidine and morpholine,

and subsequent reaction with

C) a copolymer which is based on butadiene and acrylonitrile and contains primary and/or secondary amino groups, the amount of (C) being determined in such a way that the number of primary and secondary amino groups corresponds to from 1 to 50 mol% of the epoxide groups present in the epoxy resin (A), and also

(D) with one or more primary and/or secondary amines selected from the group consisting of hexylamine, octylamine, dibutylamine, ethylbutylamine, ethylenediamine, 1,3-diaminopropane, 1,4-diaminobutane, 1,6-diaminohexane, 2-methylpentane-1,5-diamine, 4,7-dioxadecane-1,10-diamine, 4,9-dioxadodecane-1,12-diamine, 4,4'diaminodicyclohexylmethane, 3,3,-dimethyl-4,4'-diaminodicyclohexylmethane, propanolamine, isopropanolamine, methylethanolamine, 2,2'-aminoethoxyethanol aminoethylmethylamine, diethylenetriamine, triethylenetetramine, 3-(2-aminoethyl)-aminopropylamine or dipropylenetriamine, to convert the epoxide groups still present.

2. A binder as claimed in claim 1, obtainable by using at least one dialkylamine and/or alkanolamine containing 2 to 18 carbon atoms as component (B).

3. A binder as claimed in claim 1 or 2, wherein component (C) is an amino-containing butadiene/acrylonitrile copolymer which contains from 5 to 45% by weight of acrylonitrile as copolymerized units and on average from 1.4 to 3.0 primary and/or secondary amino groups in the copolymer molecule.

4. A binder as claimed in any of claims 1 to 3, wherein the amino-containing butadiene/acrylonitrile copolymer is obtainable from a carboxyl-containing butadiene/acrylonitrile copolymer and a primary and/or secondary diamine.

5. The use of a binder as claimed in any of claims 1 to 4 in the form of an agueous dispersion, which additionally contains a crosslinker with or without a pigment, an organic solvent and/or a further auxiliary, as coating composition.

6. A use as claimed in claim 5, for the cathodic electrocoating of electrically conductive substrates.

7. A coating composition based on a binder as claimed in any of claims 1 to 4 in the form of an aqueous dispersion which additionally contains a polyvalent blocked isocyanate, an amino or phenolic resin, a polyaminomethylated polyphenol, a crosslinker which cures via esteraminolysis and/or transesterification, or a urea condensation product.

8. A process for preparing a coating by cathodic electrocoating from an electrocoating bath which comprises using an electrocoating bath containing an acid-protonatable binder as claimed in any of claims 1 to 4 or a coating composition as claimed in claim 7 with or without further auxiliaries.

9. A surface coated article obtainable by applying a coating composition as claimed in claim 7 to this article and subsequent baking.

**Revendications**

1. Liants diluables à l'eau par protonation avec des acides, que l'on peut obtenir par la réaction
A) d'une résine époxyde possédant un poids moléculaire moyen de 300 à 6000 et, en moyenne, 1,5 à 3,0 radicaux époxyde par molécule et
B) de 20 à 80% molaires, par rapport à la quantité de radicaux époxyde présents dans la résine époxyde (A), d'au moins une amine choisie parmi les alcanolamines et/ou les amines aliphatiques ou cycloaliphatiques comportant jusqu'à 40 atomes de carbone, comme aussi la pyrrolidine, la pipéridine et la morpholine
et la réaction subséquente avec
C) des copolymères contenant des radicaux amino primaires et/ou secondaires à base de butadiène et d'acrylonitrile, où la proportion de (C) est mesurée de telle manière que le nombre de radicaux

8

amino primaires et secondaires corresponde à 1 à 50% molaires des radicaux époxyde présents dans la résine époxyde (A), comme aussi

D) avec au moins une amine primaire et/ou secondaire choisie dans le groupe formé par les composés qui suivent :

hexylamine, octylamine, dibutylamine, éthylbutylamine, éthylènediamine, 1,3-diaminopropane, 1,4-diaminobutane, 1,6-diaminohexane, 2-méthylpentane-1,5-diamine, 4,7-dioxadécane-1,10-diamine, 4,9-dioxadodécane-1,12-diamine, 4,4'-diaminocyclohexylméthane, 3,3'-diméthyl-4,4'-diaminodicyclohexylméthane, propanolamine, isopropanolamine, méthyléthanolamine, 2,2'-aminoéthoxyéthanol, aminoéthylméthylamine, diéthylènetriamine, triéthylènetétramine, 3-(2-aminoéthyl)aminopropylamine, dipropylènetriamine, en vue de la réaction des radicaux époxyde encore présents.

2. Liants selon la revendication 1, que l'on peut obtenir par l'utilisation d'au moins une dialkylamine et/ou une alcanolamine qui contient de 2 à 18 atomes de carbone, à titre de composant (B).

3. Liants selon la revendication 1 ou 2, dans lesquels le composant (C) est un copolymère de butadiène et d'acrylonitrile qui contient des radicaux amino, qui contient de 5 à 45% en poids d'acrylonitrile incorporés par polymérisation et, en moyenne, 1,4 à 3,0 radicaux amino primaires et/ou secondaires dans la molécule du copolymère.

4. Liants selon l'une quelconque des revendications 1 à 3, dans lesquels le copolymère de butadiène et d'acrylonitrile contenant des radicaux amino peut être obtenu à partir d'un copolymère de butadiène et d'acrylonitrile contenant des radicaux carboxyle et d'une diamine primaire et/ou secondaire.

5. Utilisation des liants selon les revendications 1 à 5, sous forme d'une dispersion aqueuse qui contient, en outre, des agents de réticulation et éventuellement des pigments, des solvants organiques et/ou d'autres adjuvants, à titre d'agents de revêtement.

6. Utilisation des liants diluables à l'eau par protonation avec des acides selon la revendication 6, en vue du laquage par trempage électrophorétique cathodique de subjectiles conducteurs de l'électricité.

7. Compositions ou agents de revêtement à base de liants selon les revendications 1 à 5, sous forme d'une dispersion aqueuse, qui contient complémentairement un isocyanate polyfonctionnel bloqué, une résine aminoplaste ou phénoplaste, un polyphénolpolyamino-méthylé, un agent de réticulation durcissant par esteraminolyse et/ou transestérification, ou un produit de condensation de l'urée.

8. Procédé de réalisation de revêtements par laquage par trempage électrophorétique ou électrodéposition cathodique, à partir d'un bain de laquage par trempage électrophorétique ou d'électrodéposition, caractérisé en ce que ce bain contient un liant protonisable avec des acides selon les revendications 1 à 5, ou un agent ou composition de revêtement selon la revendication 8 avec d'éventuels adjuvants supplémentaires.

9. Objet pourvu d'un revêtement, que l'on peut obtenir par l'application d'un agent ou d'une composition de revêtement selon la revendication 8 sur l'objet en question et cuisson subséquente.